# EUROPÄISCHE PATENTSCHRIFT

(11) **EP 2 808 274 B1**
(45) Veröffentlichungstag und Bekanntmachung des Hinweises auf die Patenterteilung: **05.10.2016**
(21) Anmeldenummer: 14169104.8
(22) Anmeldetag: 20.05.2014
(51) Int. Cl.: B65G 1/08, B65G 13/00, B65G 13/11

(54) **Transportbahn für Stückgüter, insbesondere für beladene Transportpaletten**
Conveyor track for piece goods, in particular for loaded transport pallets
Convoyeur pour marchandise, en particulier pour des palettes de transport chargées

(30) Priorität: 31.05.2013 DE 102013105600
(43) Veröffentlichungstag der Anmeldung: 03.12.2014
(73) Patentinhaber: Dynamic Systems Engineering B.V., 7005 AG Doetinchem (NL)
(72) Erfinder: Berndsen, Roland Manfred, 6942EX Didam (NL); Lieftink, Willem Johan, 7091XG Dinxperlo (NL)
(74) Vertreter: Bungartz Christophersen Partnerschaft mbB Patentanwälte

(56) Entgegenhaltungen:
- EP-A1- 0 704 392
- WO-A1-95/19308
- DE-B- 1 221 979
- DE-U- 1 899 383
- DE-U1-202010 001 853
- JP-A- H06 211 328
- JP-A- 2009 161 262
- US-A- 1 946 458
- US-A- 2 628 697
- US-A- 3 058 564

## Beschreibung

Die Erfindung betrifft eine Transportbahn für beladene Transportpaletten, mit längs der Transportbahn auf zueinander parallelen Drehachsen angeordneten, zylindrischen Walzen, die in mindestens zwei zueinander parallelen Reihen angeordnet sind, wobei die Drehachsen der Walzen jeder der zwei Reihen zu den Walzen der jeweils anderen Reihe hin abschüssig geneigt verlaufen.

Derartige Transportbahnen kommen z. B. in großen Paletten-Regallagern und insbesondere in Hochregallagern zum Einsatz. In der Regel sind die Transportbahnen zum jeweiligen Entnahmeende hin leicht abschüssig geneigt, so dass beladene Transportpaletten, z. B. genormte Euro-Paletten, unter ihrem Eigengewicht und mit ihrer flachen Unterseite auf den frei drehbar gelagerten Walzen aufliegend, zum Entnahmeende laufen, wo sie an geeigneten Stopelementen zum Stillstand kommen. Das Ein- und Auslagern der beladenen Paletten erfolgt üblicherweise mittels Gabelstaplern oder stationären Regalbediengeräten (RBG).

Im Hinblick auf einen geringen Aufwand bei der Montage der Transportbahnen werden beidseitig gelagerte, zylindrische Walzen verwendet, deren Länge etwas größer ist als die in Transportrichtung betrachtete Breite des darauf entlangrollenden Stückguts. In der Praxis hat sich herausgestellt, dass es bei schweren Stückgütern und insbesondere bei schwer beladenen Normpaletten zu Beeinträchtigungen der Rolleigenschaften des Stückguts entlang der Transportbahn kommen kann. Die Ursache hierfür ist, dass genormte Transportpaletten nicht wirklich starr sind, sondern sie dazu neigen, sich unter schwerer Last nach unten durchzubiegen. Dadurch kommt es zu einer Biegung auch der Walzen, was wiederum zu Beeinträchtigungen der an beiden Enden der Walzen angeordneten Walzenlagerungen führt. Diese arbeiten mit erhöhtem bzw. nicht mehr reproduzierbarem Widerstand, was daher die eigentliche Ursache für die zu beobachtenden Beeinträchtigungen der Rolleigenschaften des Stückguts entlang der Transportbahn ist.

Das geschilderte Problem ließe sich durch besonders biegefeste Walzen vermeiden. Dies würde jedoch für die Walzen einen erhöhten Materialeinsatz bedingen bzw. die durchgehende Verwendung von z. B. Stahl anstelle von Kunststoff, was dann aber zu deutlich gesteigerten Herstellkosten führen würde.

Daher ist es Aufgabe der Erfindung, durch geeignete konstruktive Maßnahmen die vor allem bei schweren Stückgütern zu beobachtenden Beeinträchtigungen der Rolleigenschaften des Stückguts entlang der Transportbahn zu reduzieren.

Zur Lösung dieser Aufgabe wird eine Transportbahn für beladene Transportpaletten mit den Merkmalen des Anspruchs 1 vorgeschlagen.

Mit der erfindungsgemäßen Transportbahn mit einer Neigung der Drehachsen mit einem Neigungswinkel zur Horizontalen zwischen 0,5° und 2° ist es möglich, die bei schweren Stückgütern und insbesondere bei schwer beladenen Normpaletten zu beobachtenden Beeinträchtigungen der Rolleigenschaften der Palette entlang der Transportbahn zu reduzieren. Erreicht wird, ohne hierfür die Qualität der Walzenlagerungen oder des Materials, aus dem die Walzen bestehen, verbessern zu müssen, ein widerstandsärmerer und insgesamt ruhigerer Lauf der beladenen Palette längs der Transportbahn. Alternativ lassen sich die so verbesserten Rolleigenschaften der beladenen Palette dazu nutzen, die Dichte der Walzenbestückung in Längsrichtung der Transportbahn zu verringern, d. h. die Anzahl der pro Längeneinheit verbauten Walzen.

Rollenbahnen mit zueinander geneigt angeordneten Rollen gattungsgemäßen sind zwar im Prinzip bekannt, z. B. aus der DE 37 08 929 A1, der WO 95/19308 und der US 2,628,697. Die Neigung ist jedoch sehr stark und es wird mit ihr bezweckt, Stückgüter mit abgewinkelter oder gerundeter Unterseite, wie z. B. konische Spulen oder Zylinder in einer Art Rinne zu transportieren, um während des Transports deren Ausrichtung bzw. Zentrierung zu erzielen. Hingegen sind die bekannten Rollenbahnen nicht einsetzbar wenn es gilt, großflächige Gegenstände oder Stückgüter mit einer flachen, ebenen Unterseite längs einer Rollenbahn zu transportieren.

Eine Sonderkonstruktion einer Transportbahn ist aus der JP 2009/161262 A bekannt. Auch hier erfolgt ein Transport zylindrischer Gegenstände, wobei diese von einer flachen Förderbahn auf eine aus Walzen in deutlich rinnenförmiger Anordnung gestaltete Förderbahn überführt werden. Zwischen beiden Transportmechanismen gibt es einen kurzen Übergangsbereich, in dem ein oder zwei Walzen der linken und rechten Reihe nur einen relativ geringen Neigungswinkel zur Horizontalen aufweisen. Dies betrifft jedoch nur diesen Übergangsbereich, wohingegen der sich anschließende Transportbereich, wie bei dem oben bereits referierten Stand der Technik, sich durch eine starke Neigung der Walzen unter Bildung einer deutlichen Rinne auszeichnet, in der die zylindrischen Gegenstände zentriert werden. Für kantige Stückgüter und insbesondere schwere Transportpaletten wäre eine solche Rollenbahn nicht geeignet.

Mit einer Ausgestaltung der Transportbahn wird vorgeschlagen, dass die Walzen der Transportbahn in insgesamt zwei Reihen angeordnet und die Enden der Walzen an insgesamt drei sich in Längsrichtung der Transportbahn erstreckenden Längsprofilen drehgelagert sind, wobei an dem mittleren der drei Profile Walzen beider Reihen drehgelagert sind.

Um trotz der Anordnung der Walzen in mindestens zwei Reihen die Gesamtanzahl an Walzen gering zu halten, wird mit einer weiteren Ausgestaltung vorgeschlagen, dass in Längsrichtung der Transportbahn Walzen der ersten und Walzen der zweiten Reihe wechselweise angeordnet sind. Diese Anordnung ermöglicht relativ große Längsabstände zwischen aufeinanderfolgenden Walzen, gleichwohl stellt sich ein ruhiger Lauf der über die Walzen hinweg rollenden Transportpalette ein.

Mit einer weiteren Ausgestaltung wird vorgeschlagen, dass ein bewegliches Stückgut-Rückhalteelement vorhanden ist, welches, vorzugsweise von unten her, in den Transportquerschnitt der Transportbahn einfahrbar ist, und dass die Abstände zwischen den in Längsrichtung der Transportbahn aufeinanderfolgenden Walzen zwischen den meisten der Walzen gleich sind, jedoch die zwei unmittelbar vor dem Rückhalteelement angeordneten Walzen einen geringeren Abstand zueinander aufweisen.

Weitere Vorteile und Einzelheiten der erfindungsgemäßen Transportbahn werden nachfolgend unter Bezugnahme auf die beigefügten Zeichnungen erläutert. Darin zeigen:
- Figur 1: eine Draufsicht auf einen Längsabschnitt einer einzelnen, für den Transport beladener Transportpaletten bestimmten Transportbahn und
- Figur 2: einen Querschnitt durch die Transportbahn einschließlich einer darauf aufliegenden Transportpalette.

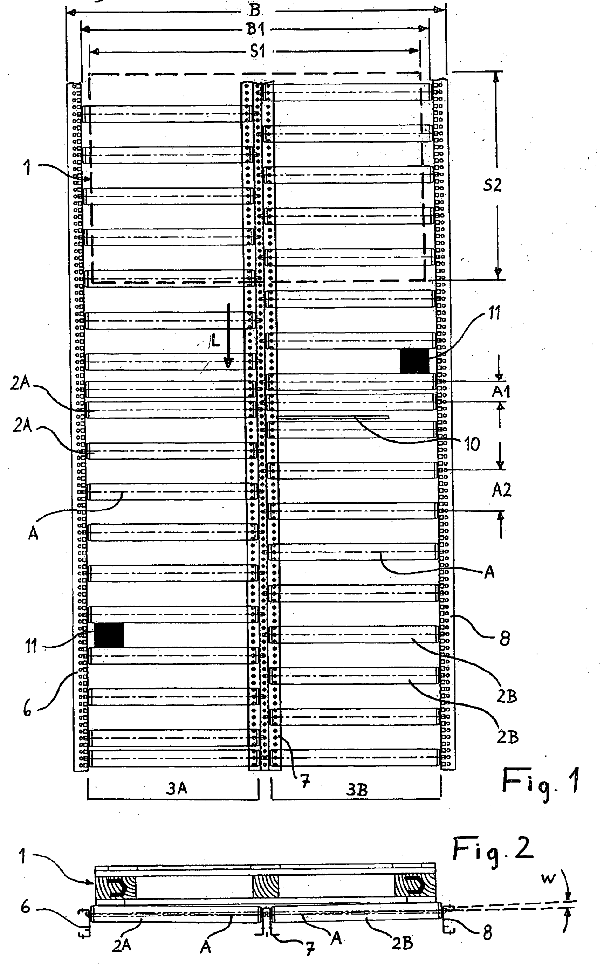

Die Figur 1 zeigt in Draufsicht eine einzelne Transportbahn für den Transport von Stückgütern in Längsrichtung L. Wiedergegeben ist nur ein Längsabschnitt der insgesamt deutlich längeren Transportbahn. Die Transportbahn kann Bestandteil eines ausgedehnten Palettenlagers sein, in dem sich gleichartige Transportbahnen mehrfach nebeneinander und in mehreren Etagen übereinander befinden und so ein Stückgutlager bilden. Jede Transportbahn ist zu ihrem jeweiligen Entnahmeende hin leicht abschüssig geneigt, so dass Stückgüter, die auf den Walzen 2A, 2B der Transportbahn aufliegen, unter Schwerkrafteinfluss selbsttätig zu dem Entnahmeende hin rollen, und dort durch eine geeignete Rückhalteeinrichtung gestoppt werden.

In Figur 1 bezeichnet sind die Gesamtbreite B der Transportbahn sowie zusätzlich die Transportbreite B1. Die Transportbreite B1 ist die durch die Walzen 2A, 2B der Transportbahn zur Verfügung gestellte, maximale Aufstandsbreite für das Stückgut. Als Stückgut ist in Figur 1 gestrichelt eine Palette 1 eingezeichnet. Bei dieser kann es sich z. B. um eine aus Holz oder Kunststoff bestehende Normpalette handeln, etwa die europaweit standardisierte Euro-Palette. Der Transport der mit Waren beladenen Paletten 1 erfolgt in Queranordnung, d. h. die zwei längeren Seiten S1 der Palette erstrecken sich quer zur Längsrichtung L, und die beiden kürzeren Seiten S2 in Längsrichtung L.

Die Figur 2 zeigt einen Querschnitt durch die Transportbahn mit einer darauf aufliegenden Palette 1. Die rechteckige Unterseite solcher Paletten 1 setzt sich üblicherweise aus Leisten zusammen, die auch einen rechteckigen Rahmen bilden können. Wenn die Palette, wie in Fig. 2 dargestellt, unbeladen ist, ist ihre Unterseite flach und eben. Bei beladener Palette hingegen, insbesondere bei Beladung mit schweren Waren, kommt es in der Praxis zu einem Durchbiegen meist längs der langen Seite S1 der Palette 1. Dieses Problem ist deshalb besonders ausgeprägt, da, wie bereits beschrieben, die Paletten auf der Rollenbahn quer transportiert werden, d. h. mit ihrer längeren Seite S1 voran.

Im Hinblick auf diese Tendenz der Palette zum Durchbiegen besteht die Transportbahn aus einer ersten Reihe 3A mit Walzen 2A, und einer hierzu parallelen zweiten Reihe 3B mit Walzen 2B. Zur Abstützung und Drehlagerung der Walzen 2A, 2B weist die Transportbahn insgesamt drei Längsprofile 6, 7, 8 auf. Die Walzen 2A der linken Reihe 3A sind mit ihrem linken Ende am äußeren Längsprofil 6, und mit ihrem rechten Ende am Längsprofil 7 gelagert. Die Walzen 2B der rechten Reihe 3B sind mit ihrem linken Ende am Längsprofil 7, und mit ihrem rechten Ende am äußeren Längsprofil 8 gelagert. Das in der Transportbahn mittig angeordnete Längsprofil 7 übernimmt daher die Drehlagerung sowohl der Walzen 2A als auch der Walzen 2B. Die Walzen 2A und 2B haben die gleiche Länge und sind von zylindrischem Querschnitt. Sie weisen also über ihre Länge einen gleichbleibenden Durchmesser auf, und sie lassen sich auf diese Weise preisgünstig aus Endlosrohren produzieren.

Gemäß der Draufsicht Fig. 1 erstrecken sich die Drehachsen A der Walzen 2A, 2B im rechten Winkel zur Längsrichtung L der Rollenbahn. Sie können sich aber auch leicht schräggestellt zur Längsrichtung L erstrecken, z. B. unter einem Winkel von 80° bis 88° zur Längsrichtung L.

Gemäß Fig. 2 sind die Drehachsen A der Walzen jeder der zwei Reihen 3A, 3B zu den Walzen der jeweils anderen Reihe 3B, 3A hin abschüssig geneigt angeordnet. Insbesondere befindet sich die Drehlagerung der Walzen 2A an dem Längsprofil 6 etwas höher, als die Drehlagerung dieser Walzen an dem Längsprofil 7. Umgekehrt befindet sich die Drehlagerung der Walzen 2B der anderen Reihe an dem Längsprofil 8 etwas höher, als ihre Drehlagerung an dem Längsprofil 7.

Bevorzugt weisen die Drehachsen A der Walzen 2A, 2B einen Neigungswinkel w zwischen 0,5° und 2° zur Horizontalen auf (Fig. 2), und besonders bevorzugt einen Neigungswinkel w zwischen 0,75 ° und 1,5°.

Insgesamt ergibt sich auf diese Weise eine Transportfläche im Querschnitt eines sehr flachen V, so dass die unter schwerer Last unvermeidbare Durchbiegung der Paletten 1 zu einem Kontakt auch mittlerer Bereiche der Paletten mit der jeweils linken Walze 2A und der jeweils rechten Walze 2B führt. Dabei weisen die Walzen 2A, 2B nur eine Aufstandslänge auf, die deutlich kürzer ist als die Länge der langen Seite S1 der Palette 1.

Durch diese Anordnung der Walzen in mindestens zwei zueinander parallelen Reihen bestehen keine erhöhten Festigkeitsanforderungen an das Material, aus dem die Walzen bestehen. Diese können z. B. aus hohlen Kunststoffrohren bestehen. Auch an die Qualität der Walzenlagerungen, d. h. der Drehlagerungen der Walzen 2A, 2B gegenüber den Längsprofilen 6, 7, 8, werden bei dieser Bauweise keine erhöhten Anforderungen gestellt.

Die Figur 1 lässt erkennen, dass in Längsrichtung L der Transportbahn Walzen 2A der linken Reihe 3A wechselweise mit Walzen 2B der rechten Reihe 3B angeordnet sind. Auf diese Weise lässt sich trotz der Verteilung der Walzen auf zwei Reihen 3A, 3B die Gesamtanzahl an Walzen gering halten. Zudem wird durch die wechselweise Anordnung ein ruhiger Lauf der Paletten 1 erzielt, da die Unterseite der Palette trotz des in Längsrichtung L größeren Abstandes der Walzen bereits auf halber Strecke wieder eine Unterstützung findet, nämlich mit dem Hinüberrollen über die Walze der jeweils anderen Reihe.

Um eine Palette und die von hinten nachrückenden Paletten zurückzuhalten, ist an der Transportbahn ein bewegliches Stückgut-Rückhalteelement 10 vorhanden. Das Stückgut-Rückhalteelement 10 ist, vorzugsweise von unten her, in den Transportquerschnitt der Transportbahn einfahrbar. Damit nach dem Absenken des Stückgut-Rückhalteelements 10 die bis dahin blockierte Palette 1 gut anlaufen kann, sind zwar die Abstände A2 zwischen den in Längsrichtung der Transportbahn aufeinanderfolgenden Walzen 2A, 2B zwischen den meisten der Walzen gleich, jedoch weisen die zwei unmittelbar vor dem Rückhalteelement 10 angeordneten Walzen einen geringeren Abstand A1 ihrer Drehachsen A auf, so dass das Querholz der Palette auf diesen beiden Wälzen zugleich aufliegt.

Unterhalb einzelner der Walzen 2A, 2B können Bremsschuhe 11 montiert sein. Sobald diese von unten gegen die betreffenden Walzen drücken, sind diese Walzen blockiert oder zumindest gebremst, womit auch das auf diesen Walzen entlangrollende Stückgut abgebremst wird.

Das auf der Zeichnung dargestellte Ausführungsbeispiel weist insgesamt zwei Reihen 3A, 3B mit frei drehbaren Walzen auf. Ebenso möglich sind insgesamt drei Reihen mit Walzen, wobei dann die Walzen der mittleren Reihe horizontal verlaufende Drehachsen A aufweisen, und mindestens vier Längsprofile ähnlich den Profilen 6, 7, 8 benötigt werden.

### Bezugszeichenliste

- 1: Stückgut, Palette
- 2A: Walze
- 2B: Walze
- 3A: Reihe
- 3B: Reihe
- 6: Längsprofil
- 7: Längsprofil
- 8: Längsprofil
- 10: Stückgut-Rückhalteelement
- 11: Bremsschuh

- A: Drehachse
- A1: Abstand
- A2: Abstand
- B: Gesamtbreite
- B1: Transportbreite
- L: Längsrichtung
- S1: lange Seite
- S2: kurze Seite
- w: Neigungswinkel

## Patentansprüche

1. Transportbahn für beladene Transportpaletten, mit längs der Transportbahn auf zueinander parallelen Drehachsen (A) angeordneten, zylindrischen Walzen (2A, 2B), die in mindestens zwei zueinander parallelen Reihen (3A, 3B) angeordnet sind, wobei die Drehachsen (A) der Walzen (2A, 2B) jeder der zwei Reihen zu den Walzen (2B, 2A) der jeweils anderen Reihe hin abschüssig geneigt verlaufen, **dadurch gekennzeichnet, dass** die Drehachsen (A) der Walzen (2A, 2B) in beiden Reihen (3A, 3B) einen Neigungswinkel (w) zwischen 0,5° und 2° zur Horizontalen aufweisen.

2. Transportbahn nach Anspruch 1, **dadurch gekennzeichnet, dass** die Drehachsen (A) der Walzen (2A, 2B) in beiden Reihen (3A, 3B) einen Neigungswinkel (w) zwischen 0,75° und 1,5° zur Horizontalen aufweisen.

3. Transportbahn nach einem der Ansprüche 1 oder 2, **dadurch gekennzeichnet, dass** die Walzen der Transportbahn in insgesamt zwei Reihen (3A, 3B) angeordnet und die Enden der Walzen (2A, 2B) an insgesamt drei sich in Längsrichtung der Transportbahn erstreckenden Längsprofilen (6, 7, 8) drehgelagert sind, wobei an dem mittleren (7) der drei Längsprofile Walzen beider Reihen (3A, 3B) drehgelagert sind.

4. Transportbahn nach einem der Ansprüche 1 bis 3, **dadurch gekennzeichnet, dass** in Längsrichtung der Transportbahn Walzen (2A) der ersten und Walzen (2B) der zweiten Reihe wechselweise angeordnet sind.

5. Transportbahn nach einem der vorangehenden Ansprüche, **dadurch gekennzeichnet, dass** ein bewegliches Stückgut-Rückhalteelement (10) vorhanden ist, welches, vorzugsweise von unten her, in den Transportquerschnitt der Transportbahn einfahrbar ist, und dass die Abstände (A2) zwischen den in Längsrichtung (L) der Transportbahn aufeinanderfolgenden Walzen zwischen den meisten der Walzen gleich sind, jedoch die zwei unmittelbar vor dem Stückgut-Rückhalteelement (10) angeordneten Walzen einen geringeren Abstand (A1) zueinander aufweisen.

## Claims

1. Conveyor track for loaded transport pallets, comprising cylindrical rollers (2A, 2B) which are arranged along the conveyor track on mutually parallel axes of rotation (A) and which are arranged in at least two mutually parallel rows (3A, 3B), wherein the axes of rotation (A) of the rollers (2A, 2B) of each of the two rows run in an inclined manner with respect to the rollers (2B, 2A) of the respective other row, **characterized in that** the axes of rotation (A) of the rollers (2A, 2B) in both rows (3A, 3B) have an angle of inclination (w) of between 0.5° and 2° relative to the horizontal.

2. Conveyor track according to claim 1, **characterized in that** the axes of rotation (A) of the rollers (2A, 2B) in both rows (3A, 3B) have an angle of inclination (w) of between 0.75° and 1.5° relative to the horizontal.

3. Conveyor track according to any one of claims 1 or 2, **characterized in that** the rollers of the conveyor track are arranged in a total of two rows (3A, 3B) and the ends of the rollers (2A, 2B) are rotatably mounted on a total of three longitudinal profiles (6, 7, 8) extending in the longitudinal direction of the conveyor track, wherein rollers of both rows (3A, 3B) are rotatably mounted on the middle (7) of the three longitudinal profiles.

4. Conveyor track according to any one of claims 1 to 3, **characterized in that** rollers (2A) of the first row and rollers (2B) of the second row are arranged in an alternating fashion in the longitudinal direction of the conveyor track.

5. Conveyor track according to any one of the preceding claims, **characterized in that** a movable piece goods retention element (10) is present which can be moved, preferably from below, into the transport cross-section of the conveyor track, and **in that** the distances (A2) between the rollers following one another in the longitudinal direction (L) of the conveyor track are equal between most of the rollers, but the two rollers arranged immediately upstream of the piece goods retention element (10) are at a smaller distance (A1) from one another.

## Revendications

1. Bande de transport pour palettes de transport chargées, avec des rouleaux (2A, 2B) cylindriques, disposés le long de la bande de transport sur des axes de rotations (A) parallèles entre eux, qui sont disposés dans au moins deux rangées (3A, 3B) parallèles entre elles, les axes de rotation (A) des rouleaux (2A, 2B) de chacune des deux rangées s'étendent de manière inclinée par rapport aux rouleaux (2A, 2B) de l'autre rangée, **caractérisé en ce que** les axes de rotation (A) des rouleaux (2A, 2B) présentent, dans les deux rangées (3A, 3B), un angle d'inclinaison (w) entre 0,5° et 2° par rapport à l'horizontale.

2. Bande de transport selon la revendication 1, **caractérisée en ce que** les axes de rotation (A) des rouleaux (2A, 2B) présentent, dans les deux rangées (3A, 3B), un angle d'inclinaison (w) entre 0,75° et 1,5° par rapport à l'horizontale.

3. Bande de transport selon l'une des revendications 1 ou 2, **caractérisée en ce que** les rouleaux de la bande de transport sont disposés en deux rangées (3A, 3B) et les extrémités des rouleaux (2A, 2B) sont logés de manière rotative au niveau de trois profilés longitudinaux (6, 7, 8) s'étendant dans la direction longitudinale de la bande de transport, les rouleaux des deux rangées (3A, 3B) étant logés de manière rotative au niveau du profilé central (7) des trois profilés longitudinaux.

4. Bande de transport selon l'une des revendications 1 à 3, **caractérisée en ce que**, dans la direction longitudinale de la bande de transport, se trouvent des rouleaux (2A) de la première rangée et des rouleaux (2B) de la deuxième rangée.

5. Bande de transport selon l'une des revendications précédentes, **caractérisée en ce qu'**un élément de retenue de produit (10) mobile est prévu, qui peut être de préférence rétracté par le bas dans la section de transport de la bande de transport et **en ce que** les distances (A2) entre les rouleaux qui se succèdent dans la direction longitudinale (L) de la bande de transport entre la plupart des rouleaux sont identiques, mais les deux rouleaux, disposés immédiatement avant l'élément de retenue de produit (10) présentent entre eux une distance inférieure (A1).
